# EUROPEAN PATENT APPLICATION

(11) **EP 4 807 145 A1**
(43) Date of publication of application: **16.09.2026**
(21) Application number: 26164101.3
(22) Date of filing: 11.03.2026
(51) Int. Cl.: F01D 15/10, F01D 15/08, F01D 15/12, F01D 25/12, F01D 25/20, F02C 7/32

(54) **ENGINE OIL SYSTEM FOR AN AIRCRAFT ENGINE**

(30) Priority: 11.03.2025 US 202519076617
(71) Applicant: Pratt & Whitney Canada Corp., Longueuil, Québec J4G 1A1 (CA)
(72) Inventor: ABDELNOUR, Michel, (01BE5) Longueuil, J4G 1A1 (CA); GUERRA, Mario, (01BE5) Longueuil, J4G 1A1 (CA); DUROCHER, Eric S., (01BE5) Longueuil, J4G 1A1 (CA)
(74) Representative: Dehns

(57) **Abstract**

An engine (22) for an aircraft (1000) includes a gear box (68), an engine oil system (70), a starter generator (72), and a starter generator cooling circuit (92). The gear box (68) includes a gear assembly (74). The engine oil system (70) includes an oil pump (76), a heat exchanger (80), and an oil tank (78) forming an oil flow path (84) of the engine oil system (70). The oil pump (76) is coupled with the gear assembly (74). The oil pump (76) is operable to pump an engine oil along the oil flow path (84) through the heat exchanger (80) to the oil tank (78). The heat exchanger (80) includes a primary side (88) and a secondary side (90). The primary side (88) forms the oil flow path (84). The starter generator (72) is coupled with the gear assembly (74). The starter generator cooling circuit (92) has a coolant flow path (94) formed by the secondary side (90) and the starter generator (72).

## Description

### TECHNICAL FIELD

This disclosure relates to an engine oil system for an aircraft engine.

### BACKGROUND OF THE ART

Aircraft engines, such as those found in aircraft propulsion systems, typically include one or more oil systems configured for lubrication and cooling of engine components (e.g., rotating components). Various engine oil systems for aircraft engines are known. While these known engine oil systems may be suitable for their intended purposes, there is always room in the art for improvement.

### SUMMARY

According to an aspect of the present invention, an engine for an aircraft includes a gear box, an engine oil system, a starter generator, and a starter generator cooling circuit. The gear box includes a gear assembly. The engine oil system includes an oil pump, a heat exchanger, and an oil tank forming an oil flow path of the engine oil system. The oil pump is coupled with the gear assembly. The oil pump is operable to pump an engine oil along the oil flow path through the heat exchanger to the oil tank. The heat exchanger includes a primary side and a secondary side. The primary side forms the oil flow path. The starter generator is coupled with the gear assembly. The starter generator cooling circuit has a coolant flow path formed by the secondary side and the starter generator.

In an embodiment of the above, the engine may further include a rotational assembly including a bladed rotor, and the rotational assembly may be coupled with the gear assembly.

In an embodiment according to any of the previous embodiments, the engine may further include at least one engine oil load connected in fluid communication with the engine oil system, and the at least one engine oil load may include a bearing assembly rotationally supporting the rotational assembly.

In an embodiment according to any of the previous embodiments, the engine oil system may further include an air cooler further forming the oil flow path, and the air cooler may be disposed downstream of the heat exchanger along the oil flow path.

In an embodiment according to any of the previous embodiments, the engine oil system may further include a first bypass valve, the first bypass valve may be disposed between the heat exchanger and the air cooler along the oil flow path, the first bypass valve may be operable in a first state or a second state, in the first state the first bypass valve may direct the engine oil through the first bypass valve to the air cooler, and in the second state the first bypass valve may direct the engine oil through the first bypass valve to the oil tank.

In an embodiment according to any of the previous embodiments, the first bypass valve may be a thermostatic bypass valve operable to sense a temperature of the engine oil at the first bypass valve, and the first bypass valve may be operable in the first state for the temperature greater than a temperature threshold and operable in the second state for the temperature less than the temperature threshold.

In an embodiment according to any of the previous embodiments, the engine may further include a fuel system, the fuel system may include a fuel-oil heat exchanger, the fuel-oil heat exchanger may further form the oil flow path, and the fuel-oil heat exchanger may be disposed between the heat exchanger and the first bypass valve along the oil flow path.

In an embodiment according to any of the previous embodiments, the engine oil system may further include a second bypass valve, the second bypass valve may be disposed between the heat exchanger and the fuel-oil heat exchanger along the oil flow path, the second bypass valve may be operable in a third state or a fourth state, in the third state the second bypass valve may direct the engine oil from the heat exchanger to the fuel-oil heat exchanger, and in the fourth state the second bypass valve may direct the engine oil from the heat exchanger to the oil tank.

In an embodiment according to any of the previous embodiments, the engine may further include a fuel system including a fuel-oil heat exchanger, the engine oil system may further include a second bypass valve, the fuel-oil heat exchanger and the second bypass valve may further form the oil flow path upstream of the heat exchanger along the oil flow path, the second bypass valve may be operable in a third state or a fourth state, in the third state the second bypass valve may direct the engine oil through the second bypass valve to the fuel-oil heat exchanger, and in the fourth state the second bypass valve may direct the engine oil through the second bypass valve to the heat exchanger bypassing the fuel-oil heat exchanger.

In an embodiment according to any of the previous embodiments, the engine oil system may further include an air cooler and a first bypass valve, the air cooler and the first bypass valve may further form the oil flow path downstream of the heat exchanger along the oil flow path, the first bypass valve may be operable in a first state or a second state, in the first state the first bypass valve may direct the engine oil from the heat exchanger to the air cooler, and in the second state the first bypass valve may direct the engine oil from the heat exchanger to the oil tank.

In an embodiment according to any of the previous embodiments, the cooling circuit may include a coolant fluid, and the coolant fluid may be different than the engine oil.

In an embodiment according to any of the previous embodiments, the starter generator may include an electric motor coupled with the gear assembly.

According to another aspect of the present invention, a method for operating an oil system of an engine of an aircraft includes driving a gear assembly with a starter motor coupled with the gear assembly, cooling the starter motor with a cooling circuit by directing a coolant fluid through the cooling circuit along a coolant flow path through the starter motor and a secondary side of a heat exchanger, and operating the oil system to lubricate one or more engine oil loads of the aircraft engine, the operating including pumping engine oil along an oil flow path of the oil system through a primary side of the heat exchanger to an oil tank with an oil pump, the oil pump coupled with the gear assembly, the oil pump driven to pump the engine oil by the starter motor through the gear assembly.

In an embodiment of the above, driving the gear assembly, cooling the starter motor, and operating the oil system may be performed during a flight condition of the aircraft.

In an embodiment according to any of the previous embodiments, driving the gear assembly, cooling the starter motor, and operating the oil system may be performed with the engine in a shut down condition.

In an embodiment according to any of the previous embodiments, driving the gear assembly with the starter motor may include driving a rotational assembly including a bladed rotor, and the rotational assembly may be coupled with the gear assembly.

According to another aspect of the present invention, an engine for an aircraft includes a rotational assembly, at least one oil load, a gear box, an engine oil system, a starter generator, and a starter generator cooling circuit. The rotational assembly includes a bladed rotor. The at least one oil load includes a bearing assembly. The bearing assembly rotationally supports the rotational assembly. The gear box includes a gear assembly. The gear assembly is coupled with the rotational assembly. The engine oil system is connected in fluid communication with the at least one oil load. The engine oil system includes an oil pump, a heat exchanger, and an oil tank forming an oil flow path of the engine oil system. The oil pump is coupled with the gear assembly. The heat exchanger includes a primary side and a secondary side. The primary side forms the oil flow path. The starter generator is coupled with the gear assembly. The starter generator cooling circuit has a coolant flow path formed by the secondary side and the starter generator.

In an embodiment of the above, the engine oil system may further include an air cooler further forming the oil flow path, and the air cooler may be disposed downstream of the heat exchanger along the oil flow path.

In an embodiment according to any of the previous embodiments, the engine oil system may further include a first bypass valve, the first bypass valve may be disposed between the heat exchanger and the air cooler along the oil flow path, the first bypass valve may be operable in a first state or a second state, in the first state the first bypass valve may direct engine oil through the first bypass valve to the air cooler, and in the second state the first bypass valve may direct the engine oil through the first bypass valve to the oil tank.

In an embodiment according to any of the previous embodiments, the first bypass valve may be a thermostatic bypass valve operable to sense a temperature of the engine oil at the first bypass valve, and the first bypass valve may be operable in the first state for the temperature greater than a temperature threshold and operable in the second state for the temperature less than the temperature threshold.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### DESCRIPTION OF THE DRAWINGS

FIG. 1 illustrates an aircraft including a propulsion system, in accordance with one or more embodiments of the present disclosure.
FIG. 2 schematically illustrates a cutaway, side view of an aircraft propulsion system including an engine, in accordance with one or more embodiments of the present disclosure.
FIG. 3 schematically illustrates an engine oil system for the engine, in accordance with one or more embodiments of the present disclosure.
FIG. 4 schematically illustrates another engine oil system for the engine, in accordance with one or more embodiments of the present disclosure.
FIG. 5 schematically illustrates another engine oil system for the engine, in accordance with one or more embodiments of the present disclosure.
FIG. 6 schematically illustrates another engine oil system for the engine, in accordance with one or more embodiments of the present disclosure.
FIG. 7 schematically illustrates another engine oil system for the engine, in accordance with one or more embodiments of the present disclosure.

### DETAILED DESCRIPTION

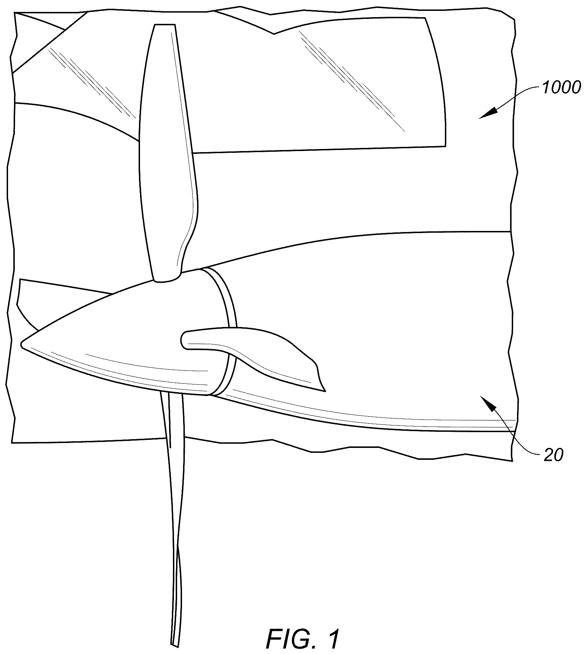

FIG. 1 illustrates an aircraft 1000 including at least one propulsion system 20. Briefly, the aircraft may be a fixed-wing aircraft (e.g., an airplane), a rotary-wing aircraft (e.g., a helicopter), a tilt-rotor aircraft, a tilt-wing aircraft, or another aerial vehicle. Moreover, the aircraft may be a manned aerial vehicle or an unmanned aerial vehicle (UAV, e.g., a drone).

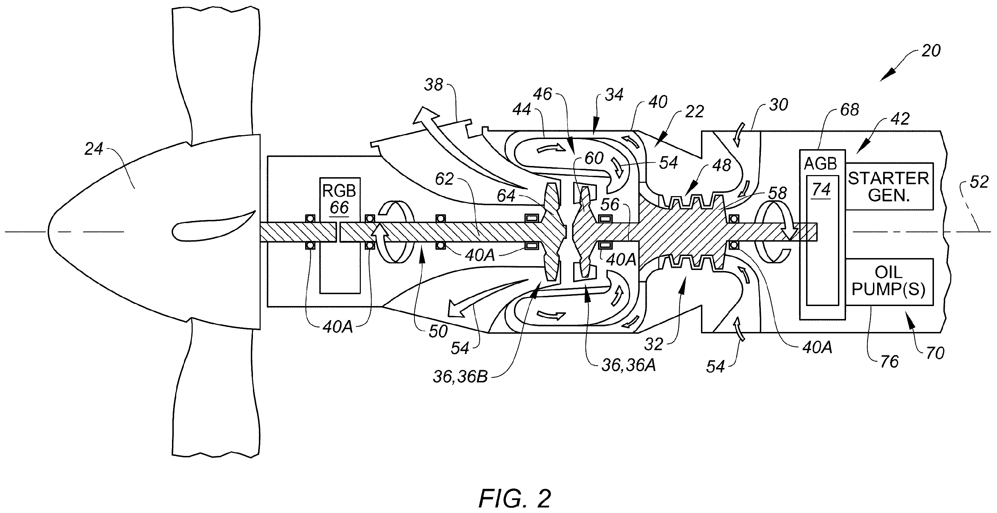

FIG. 2 schematically illustrates a cutaway, side view of the propulsion system 20. The propulsion system 20 of FIG. 2 includes an engine 22 and a propulsor 24. The engine 22 of FIG. 2 is configured as a turboprop gas turbine engine. However, the present disclosure is not limited to any particular configuration of gas turbine engine for the propulsion system 20, and examples of gas turbine engine configurations for the propulsion system 20 may include, but are not limited to, a turbofan engine, a turbojet engine, a propfan engine, or the like. Aspects of the present disclosure may be equally applicable to aircraft propulsion systems including other engine configurations such as, but not limited to, rotary engines, piston engines, and the like, or to electric aircraft propulsion systems (e.g., battery-electric propulsion systems, fuel-cell-electric propulsion systems, etc.). Aspects of the present disclosure may also be equally applicable to aircraft engines which are not part of a propulsion system, for example, an engine for an auxiliary power unit (APU).

The engine 22 of FIG. 2 includes an air intake 30, a compressor section 32, a combustor section 34, a turbine section 36, an engine exhaust 38, an engine static structure 40, and an accessory assembly 42. The combustor section 34 includes a combustor 44 (e.g., an annular combustor) forming a combustion chamber 46. The turbine section 36 includes a high-pressure turbine 36A and a power turbine 36B.

Components of the compressor section 32 and/or the turbine section 36 of FIG. 2 form a first rotational assembly 48 (e.g., a high-pressure spool) and a second rotational assembly 50 of the engine 22. The first rotational assembly 48 and the second rotational assembly 50 are mounted for rotation about a rotational axis 52 (e.g., an axial centerline) of the engine 22 relative to the engine static structure 40. The engine 22 of FIG. 2 has a free turbine configuration in which the second rotational assembly 50 is disposed (e.g., entirely disposed) downstream of the first rotational assembly 48 relative to a core gas flow path 54 through the engine 22 (i.e., the first rotational assembly 48 and the second rotational assembly 50 are not concentric or axially coincident). The present disclosure, however, is not limited to this foregoing exemplary engine 22 configuration of FIG. 2.

The first rotational assembly 48 includes a first shaft 56, a bladed compressor rotor 58 for the compressor section 32, and a bladed first turbine rotor 60 for the high-pressure turbine 36A. The first shaft 56 interconnects the bladed compressor rotor 58 and the bladed first turbine rotor 60.

The second rotational assembly 50 of FIG. 2 includes a second shaft 62 and a bladed second turbine rotor 64 for the power turbine 36B. The second shaft 62 is connected to the bladed second turbine rotor 64. The second shaft 62 operably connects (e.g., directly or indirectly connects) the bladed second turbine rotor 64 with the propulsor 24. For example, the second shaft 62 of FIG. 2 is coupled with the propulsor 24 (e.g., a propulsor input shaft) by a gear box 66 (e.g., a reduction gear box (RGB)). The gear box 66 includes a gear assembly (e.g., an epicyclic gear assembly) coupling the second shaft 62 and the propulsor 24. The gear assembly may be a reduction gear assembly configured to drive rotation of the propulsor 24 at a reduced rotational speed relative to the second shaft 62. Of course, the second shaft 62 may alternatively be directly connected to the propulsor 24 to drive the propulsor 24 at the same rotational speed as the second shaft 62.

The engine static structure 40 includes engine casings, cowlings, and other fixed (e.g., non-rotating) structures of the engine 22 which form, house, and/or support components of the engine 22 such as, but not limited to, those of the air intake 30, the compressor section 32, the combustor section 34, the turbine section 36, and the engine exhaust 38. The engine static structure 40 may include one or more bearing assemblies 40A configured to rotationally support components of the first rotational assembly 48 and the second rotational assembly 50.

The accessory assembly 42 includes an accessory gear box (AGB) 68, an engine oil system 70, and a starter generator 72. The accessory gear box 68 includes a gear assembly 74. The gear assembly 74 of FIG. 2 is coupled with the first rotational assembly 48 (e.g., the first shaft 56). The engine oil system 70 is configured to circulate engine oil for lubrication and cooling of engine 22 components such as, but not limited to, the first rotational assembly 48, the second rotational assembly 50, the gear box 66, the accessory gear box 68, and components of the engine static structure 40 (e.g., the bearing assemblies 40A). The engine oil system 70 includes one or more oil pumps 76 configured to direct (e.g., pump) oil through the engine oil system 70. The oil pumps 76 may include oil supply pumps, scavenge pumps, or the like, as needed to circulate oil through the engine oil system 70 for lubrication and cooling of engine 22 components. The oil pumps 76 (e.g., rotors of the oil pumps 76) are coupled with the gear assembly 74 such that rotation of the first rotational assembly 48 drives operation of the oil pumps 76 through the gear assembly 74. The starter generator 72 is also coupled with the gear assembly 74. The starter generator 72 may be configured as an electric motor operable to drive rotation of the first rotational assembly 48 through the gear assembly 74 for an engine 22 start sequence. The accessory assembly 42 may include additional components configured to be driven by the gear assembly 74 such as, but not limited to, hydraulic pumps, electric generators, air compressors, and the like.

During operation of the propulsion system 20 of FIG. 2, ambient air enters the propulsion system 20 through the air intake 30 and is directed through the engine 22 along the core gas flow path 54. The ambient air flow along the core gas flow path 54 is compressed in the compressor section 32 by rotation of the bladed compressor rotor 58, and directed into the combustor 44 (e.g., the combustion chamber 46). Fuel is injected into the combustion chamber 46 and mixed with the compressed air to provide a fuel-air mixture. This fuel-air mixture is ignited, and combustion products thereof flow through the high-pressure turbine 36A and the power turbine 36B and are exhausted from the propulsion system 20 through the engine exhaust 38. The bladed first turbine rotor 60 and the bladed second turbine rotor 64 rotationally drive the first rotational assembly 48 and the second rotational assembly 50, respectively, in response to the combustion gas flow through the high-pressure turbine 36A and the power turbine 36B along the core gas flow path 54. The second rotational assembly 50 (e.g., the second shaft 62) drives rotation of the propulsor 24, for example, through the gear box 66.

During some operating conditions of the propulsion system 20, including during flight operations, the engine 22 may be shut down (e.g., fuel flow to the combustor 44 stopped) for an extended period of time. In this shut down condition, one or both of the first rotational assembly or the second rotational assembly 50 may be driven to rotate (e.g., windmill) by air flow passing through the engine 22 along the core gas flow path 54. During this windmilling condition, components of the engine 22 such as, but not limited to, the first rotational assembly 48, the second rotational assembly 50, the gear box 66, the accessory gear box 68, and components of the engine static structure 40 (e.g., the bearing assemblies 40A), may require engine oil lubrication to prevent damage. The starter generator 72 may be operated to drive the oil pumps 76, and thereby circulate engine oil through the engine oil system 70 to components of the engine 22 requiring lubrication. However, during windmilling conditions, there may be insufficient heat rejection from the engine 22 to the engine oil system 70 to maintain a main oil temperature (MOT) of engine oil in the engine oil system 70 at a minimum required temperature, particularly during flight operations (e.g., cruising altitude). Moreover, in some operating conditions, extended operation of the starter generator 72 to drive the oil pumps 76 may require additional cooling of the starter generator 72 to prevent overheating. In-flight relighting of the engine 22 (e.g., the combustor 44) following extended windmilling conditions may be limited or impossible if the MOT of the engine oil in the engine oil system 70 is too cold.

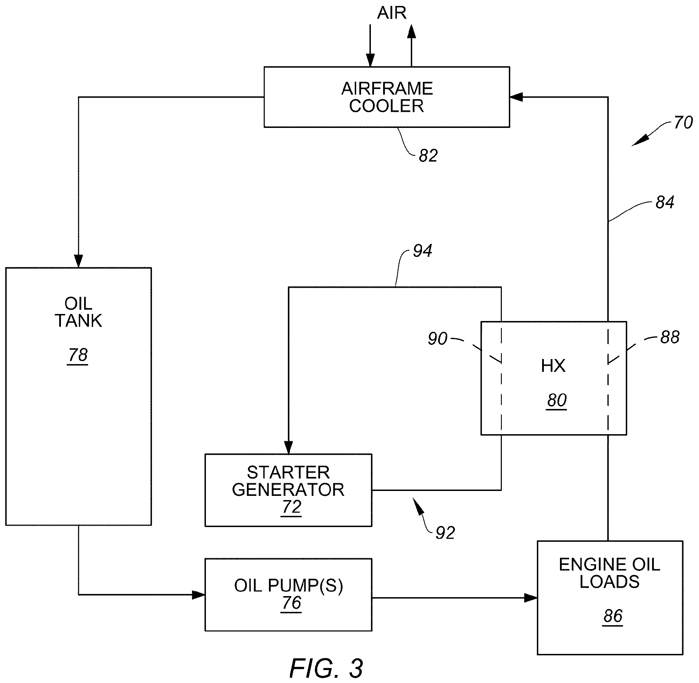

FIG. 3 schematically illustrates the engine oil system 70 and the starter generator 72 in greater detail. The engine oil system 70 of FIG. 3 includes the oil pumps 76, an oil tank 78, and a heat exchanger 80 forming an oil flow path 84 of the engine oil system 70. The engine oil system 70 may further include an oil cooler 82 further forming the oil flow path 84. The oil pumps 76 are configured to circulate engine oil along the oil flow path 84 through engine oil loads 86 of the engine 22. The engine oil loads 86 include lubricated components of the engine 22 such as, but not limited to, the first rotational assembly 48, the second rotational assembly 50, the gear box 66, the accessory gear box 68, and components of the engine static structure 40 (e.g., the bearing assemblies 40A), as previously discussed. As an example, the engine oil loads 86 are schematically shown on the oil flow path 84 of FIG. 3 between the heat exchanger 80 and the oil cooler 82; however, the present disclosure is not limited to any particular location of the engine oil loads 86 in the oil flow path 84. Alternatively, the engine oil loads 86 may be disposed on a discrete oil flow path, separate from the oil flow path 84, and supplied with engine oil from the oil tank 78 along this discrete oil flow path (e.g., by one or more oil pumps). In other words, the engine oil loads 86 may be connected in fluid communication with the oil flow path 84 (e.g., the oil tank 78) but may not form a portion of the oil flow path 84.

The heat exchanger 80 includes a primary side 88 and a secondary side 90. The primary side 88 forms a portion of the oil flow path 84 and engine oil is directed through the primary side 88 along the oil flow path 84 by the oil pumps 76. The secondary side 90 forms a portion of a cooling circuit 92 for the starter generator 72. The cooling circuit 92 forms a coolant flow path 94 (e.g., a closed-circuit coolant flow path) configured to circulate a coolant fluid for the starter generator 72. The coolant fluid may be circulated along the coolant flow path 94 by operation of the starter generator 72 or by a pump operable to pump the coolant fluid through the cooling circuit 92 along the coolant flow path 94. The coolant fluid may be an engine oil similar to that of the engine oil system 70, or another coolant fluid such as, but not limited to, propylene glycol, ethylene glycol, or the like. The coolant fluid may additionally be a gas (e.g., air), for example, where the starter generator 72 includes an air-cooled motor.

The oil cooler 82 is disposed downstream of the heat exchanger 80 within the oil flow path 84, for example, between the heat exchanger 80 and the oil tank 78. The oil cooler 82 may be configured as an air-oil heat exchanger (AOHE). For example, the oil cooler 82 may be configured as an airframe cooler disposed at (e.g., on, adjacent, or proximate) an exterior of the propulsion system 20 or the aircraft 1000 (see FIG. 1) to receive an ambient air flow for cooling the engine oil flowing through the oil cooler 82 along the oil flow path 84.

During windmilling conditions of the engine 22 and its accessory assembly 42, or other conditions in which the starter generator 72 is operating, the starter generator 72 drives rotation of the oil pumps 76 (and the first rotational assembly 48) through the gear assembly 74. Coolant fluid circulating along the coolant flow path 94 absorbs heat from the starter generator 72 and transfers this heat to the engine oil of the engine oil system 70 at the secondary side 90, thereby warming the engine oil. The engine oil, circulated along the oil flow path 84 by the oil pumps 76, facilitates cooling of the starter generator 72 (e.g., through the cooling circuit 92) while also being heated by the cooling circuit 92 through the heat exchanger 80 (e.g., above a threshold MOT) to better facilitate the lubrication of the engine oil loads 86. The engine oil flow along the oil flow path 84 may be directed through the oil cooler 82 downstream of the heat exchanger 80, thereby cooling the engine oil, and then subsequently returned to the oil tank 78.

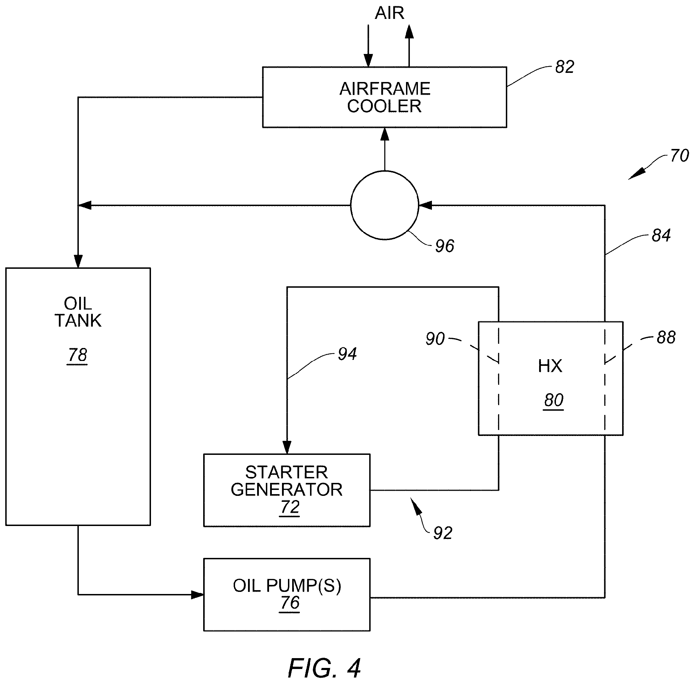

Referring to FIG. 4, in some embodiments, the engine oil system 70 may further include a bypass valve 96. The bypass valve 96 of FIG. 4 forms a portion of the oil flow path 84 between the heat exchanger 80 on a first side and the oil cooler 82 and the oil tank 78 on a second side. The bypass valve 96 is operable in a first state (e.g., a first position) and a second state (e.g., a second position). In the first state, the bypass valve 96 directs engine oil flow along the oil flow path 84 from the heat exchanger 80 to (and through) the oil cooler 82. In the second state, the bypass valve 96 directs engine oil flow along the oil flow path 84 from the heat exchanger 80 to the oil tank 78, bypassing the oil cooler 82. The bypass valve 96 may be configured as a thermostatic bypass valve operable to sense a temperature of the engine oil flowing therethrough and operate in one of the first state or the second state in response to the sensed engine oil temperature. For example, where the sensed engine oil temperature is greater than a temperature threshold, the bypass valve 96 may operate in the first state to direct engine oil into and through the oil cooler 82. Where the sensed engine oil temperature is less than the temperature threshold, the bypass valve 96 may operate in the second state to direct engine oil to the oil tank 78 bypassing the oil cooler 82. In some embodiments, the bypass valve 96 may be operable in one or more intermediate states (e.g., positions) to direct a portion of the engine oil flow through the bypass valve 96 to the oil cooler 82 and another portion of the engine oil flow through the bypass valve 96 to the oil tank 78 bypassing the oil cooler 82.

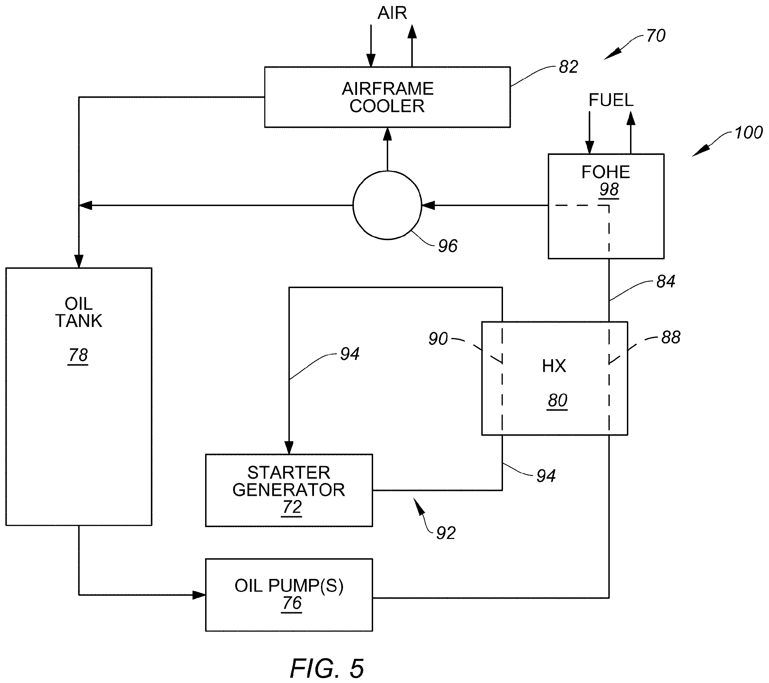

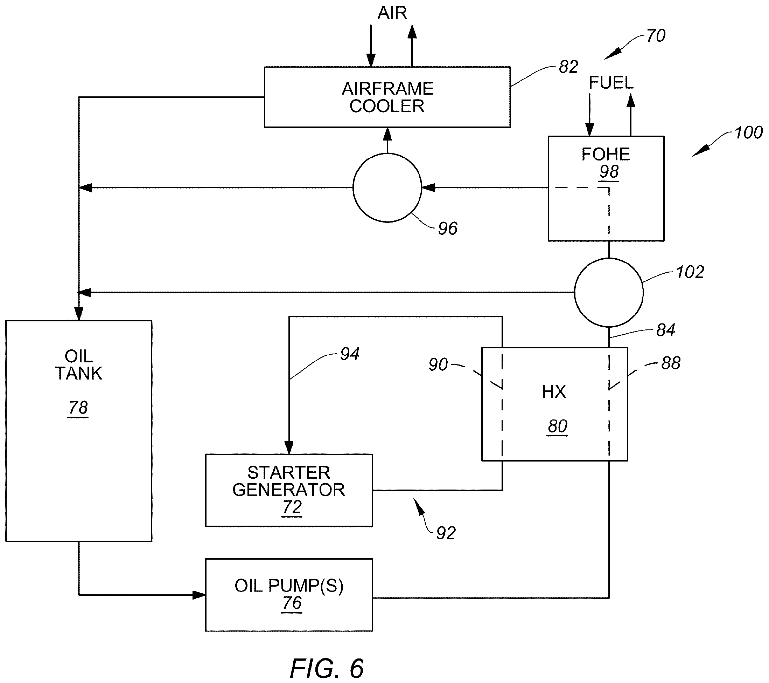

Referring to FIG. 5, in some embodiments, the engine oil system 70 may further include a fuel-oil heat exchanger (FOHE) 98 of a fuel system 100 of the engine 22. The engine oil system 70 of FIG. 5 may additionally include the bypass valve 96 described above with respect to FIG. 4; however, the present disclosure is not limited to use of the fuel-oil heat exchanger 98 in combination with a bypass valve, such as the bypass valve 96. The fuel-oil heat exchanger 98 forms a portion of the oil flow path 84 between the heat exchanger 80 and the bypass valve 96. The fuel-oil heat exchanger 98 is configured to transfer heat from the engine oil along the oil flow path 84 to a fuel of the fuel system 100, thereby cooling the engine oil while heating the fuel in preparation for injection and combustion within the combustor 44 (see FIG. 2). The bypass valve 102 of FIG. 6 forms a portion of the oil flow path 84 between the fuel-oil heat exchanger 98 on a first side and the oil cooler 82 and the oil tank 78 on a second side. Engine oil flow from the fuel-oil heat exchanger 98 may then be directed to the oil cooler 82 and/or the oil tank 78 by the bypass valve 96, for example, as described above.

Referring to FIG. 6, in some embodiments, the engine oil system 70 may further include another bypass valve 102. The engine oil system 70 of FIG. 6 may additionally include the bypass valve 96 and the fuel-oil heat exchanger 98 described above with respect to FIG. 5. The bypass valve 102 of FIG. 6 forms a portion of the oil flow path 84 between the heat exchanger 80 on a first side and the fuel-oil heat exchanger 98 and the oil tank 78 on a second side. The bypass valve 102 is operable in a first state (e.g., a first position) and a second state (e.g., a second position). In the first state, the bypass valve 102 directs engine oil flow along the oil flow path 84 from the heat exchanger 80 to (and through) the fuel-oil heat exchanger 98. In the second state, the bypass valve 102 directs engine oil flow along the oil flow path 84 from the heat exchanger 80 to the oil tank 78, bypassing the oil cooler 82, the bypass valve 96, and the fuel-oil heat exchanger 98. The bypass valve 102 may be configured as a thermostatic bypass valve operable to sense a temperature of the engine oil flowing therethrough and operate in one of the first state or the second state in response to the sensed engine oil temperature. For example, where the sensed engine oil temperature is greater than a temperature threshold, the bypass valve 102 may operate in the first state to direct engine oil into and through the fuel-oil heat exchanger 98 to the bypass valve 96. Where the sensed engine oil temperature is less than the temperature threshold, the bypass valve 102 may operate in the second state to direct engine oil to the oil tank 78 bypassing the oil cooler 82, the bypass valve 96, and the fuel-oil heat exchanger 98. In some embodiments, the bypass valve 102 may be operable in one or more intermediate states (e.g., positions) to direct a portion of the engine oil flow through the bypass valve 102 to the fuel-oil heat exchanger 98 and another portion of the engine oil flow through the bypass valve 102 to the oil tank 78 bypassing the oil cooler 82, the bypass valve 96, and the fuel-oil heat exchanger 98.

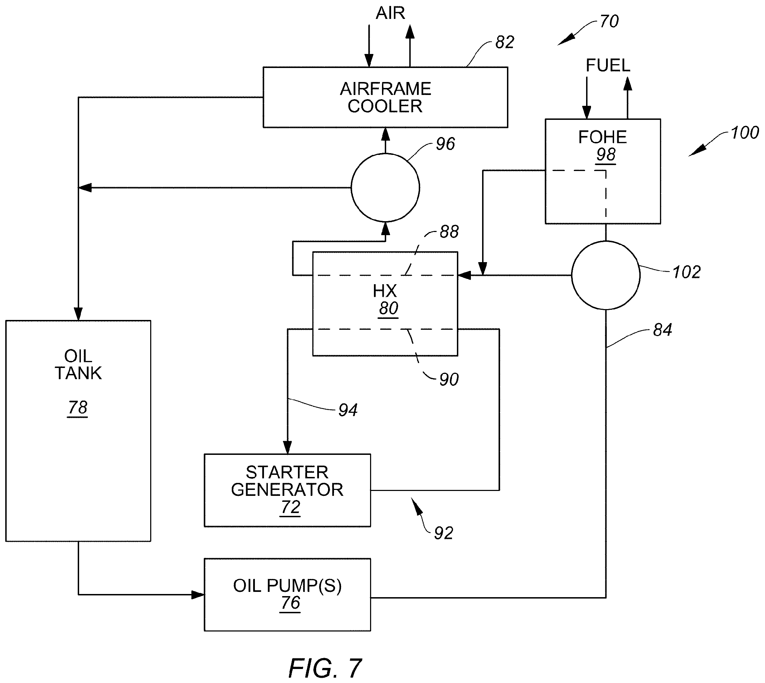

Referring to FIG. 7, in some embodiments, the engine oil system 70 may include the fuel-oil heat exchanger 98 and the bypass valve 102 disposed upstream of the heat exchanger 80 along the oil flow path 84. For example, the fuel-oil heat exchanger 98 and the bypass valve 102 may form respective portions of the oil flow path 84 between the oil pumps 76 and the heat exchanger 80. The bypass valve 102 of FIG. 7 forms a portion of the oil flow path 84 between the oil pumps 76 on a first side and the heat exchanger 80 and the fuel-oil heat exchanger 98 on a second side. In the first state, the bypass valve 102 of FIG. 7 directs engine oil flow along the oil flow path 84 from the oil pumps 76 to (and through) the fuel-oil heat exchanger 98 to the heat exchanger 80. In the second state, the bypass valve 102 of FIG. 7 directs engine oil flow along the oil flow path 84 from the oil pumps 76 to the heat exchanger 80, bypassing the fuel-oil heat exchanger 98. The bypass valve 102 of FIG. 7 may be configured as a thermostatic bypass valve operable to sense a temperature of the engine oil flowing therethrough and operate in one of the first state or the second state in response to the sensed engine oil temperature. For example, where the sensed engine oil temperature is greater than a temperature threshold, the bypass valve 102 may operate in the first state to direct engine oil into and through the fuel-oil heat exchanger 98 to the heat exchanger 80. Where the sensed engine oil temperature is less than the temperature threshold, the bypass valve 102 may operate in the second state to direct engine oil to the heat exchanger 80 bypassing the fuel-oil heat exchanger 98.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. An engine (22) for an aircraft (1000), the engine (22) comprising:
a gear box (68) including a gear assembly (74);
an engine oil system (70) including an oil pump (76), a heat exchanger (80), and an oil tank (78) forming an oil flow path (84) of the engine oil system (70), the oil pump (76) coupled with the gear assembly (74), the oil pump (76) operable to pump an engine oil along the oil flow path (84) through the heat exchanger (80) to the oil tank (78), the heat exchanger (80) including a primary side (88) and a secondary side (90), the primary side (88) forming the oil flow path (84);
a starter generator (72) coupled with the gear assembly (74); and
a starter generator cooling circuit (92) having a coolant flow path (94) formed by the secondary side (90) and the starter generator (72).

2. The engine (22) of claim 1, further comprising a rotational assembly (48, 50) including a bladed rotor (60, 64), and the rotational assembly (48, 50) is coupled with the gear assembly (74).

3. The engine (22) of claim 2, further comprising at least one engine oil load (86) connected in fluid communication with the engine oil system (70), the at least one engine oil load (86) including a bearing assembly (40A) rotationally supporting the rotational assembly (48, 50).

4. The engine (22) of claim 1, 2 or 3, wherein the engine oil system (70) further includes an air cooler (82) further forming the oil flow path (84), and the air cooler (82) is disposed downstream of the heat exchanger (80) along the oil flow path (84).

5. The engine (22) of claim 4, wherein the engine oil system (70) further includes a first bypass valve (96), the first bypass valve (96) is disposed between the heat exchanger (80) and the air cooler (82) along the oil flow path (84), the first bypass valve (96) is operable in a first state or a second state, in the first state the first bypass valve (96) directs the engine oil through the first bypass valve (96) to the air cooler (82), and in the second state the first bypass valve (96) directs the engine oil through the first bypass valve (96) to the oil tank (78).

6. The engine (22) of claim 5, wherein the first bypass valve (96) is a thermostatic bypass valve operable to sense a temperature of the engine oil at the first bypass valve (96), and the first bypass valve (96) is operable in the first state for the temperature greater than a temperature threshold and operable in the second state for the temperature less than the temperature threshold.

7. The engine (22) of claim 5 or 6, further comprising a fuel system (100), the fuel system (100) includes a fuel-oil heat exchanger (98), the fuel-oil heat exchanger (98) further forms the oil flow path (84), and the fuel-oil heat exchanger (98) is disposed between the heat exchanger (80) and the first bypass valve (96) along the oil flow path (84).

8. The engine (22) of claim 7, wherein the engine oil system (70) further includes a second bypass valve (102), the second bypass valve (102) is disposed between the heat exchanger (80) and the fuel-oil heat exchanger (98) along the oil flow path (84), the second bypass valve (102) is operable in a third state or a fourth state, in the third state the second bypass valve (102) directs the engine oil from the heat exchanger (80) to the fuel-oil heat exchanger (98), and in the fourth state the second bypass valve (102) directs the engine oil from the heat exchanger (80) to the oil tank (78).

9. The engine (22) of any of claims 1 to 6, further comprising a fuel system (100) including a fuel-oil heat exchanger (98), wherein the engine oil system (70) further includes a second bypass valve (102), the fuel-oil heat exchanger (98) and the second bypass valve (102) further form the oil flow path (84) upstream of the heat exchanger (80) along the oil flow path (84), the second bypass valve (102) is operable in a third state or a fourth state, in the third state the second bypass valve (102) directs the engine oil through the second bypass valve (102) to the fuel-oil heat exchanger (98), and in the fourth state the second bypass valve (102) directs the engine oil through the second bypass valve (102) to the heat exchanger (80) bypassing the fuel-oil heat exchanger (98).

10. The engine (22) of claim 9, wherein the engine oil system (70) further includes an air cooler (82) and a first bypass valve (96), the air cooler (82) and the first bypass valve (96) further form the oil flow path (84) downstream of the heat exchanger (80) along the oil flow path (84), the first bypass valve (96) is operable in a first state or a second state, in the first state the first bypass valve (96) directs the engine oil from the heat exchanger (80) to the air cooler (82), and in the second state the first bypass valve (96) directs the engine oil from the heat exchanger (80) to the oil tank (78).

11. The engine (22) of any preceding claim, wherein the cooling circuit (92) includes a coolant fluid, and the coolant fluid is different than the engine oil, and/or wherein the starter generator (72) includes an electric motor coupled with the gear assembly (74).

12. A method for operating an oil system of an engine (22) of an aircraft (1000), the method comprising:
driving a gear assembly (74) with a starter motor coupled with the gear assembly (74);
cooling the starter motor with a cooling circuit (92) by directing a coolant fluid through the cooling circuit (92) along a coolant flow path (94) through the starter motor and a secondary side (90) of a heat exchanger (80); and
operating the oil system to lubricate one or more engine oil loads (86) of the aircraft engine (22), the operating including pumping engine oil along an oil flow path (84) of the oil system through a primary side (88) of the heat exchanger (80) to an oil tank (78) with an oil pump (76), the oil pump (76) coupled with the gear assembly (74), the oil pump (76) driven to pump the engine oil by the starter motor through the gear assembly (74).

13. The method of claim 12, wherein driving the gear assembly (74), cooling the starter motor, and operating the oil system are performed during a flight condition of the aircraft (1000).

14. The method of claim 12, wherein driving the gear assembly (74), cooling the starter motor, and operating the oil system are performed with the engine (22) in a shut down condition.

15. The method of claim 12, 13 or 14, wherein driving the gear assembly (74) with the starter motor includes driving a rotational assembly (48, 50) including a bladed rotor (60, 64), and the rotational assembly (48, 50) is coupled with the gear assembly (74).
